# EUROPEAN PATENT APPLICATION

(11) **EP 4 201 915 A1**
(43) Date of publication of application: **28.06.2023**
(21) Application number: 22211777.2
(22) Date of filing: 06.12.2022
(51) Int. Cl.: C04B 35/80, B32B 18/00, C04B 35/573, C04B 35/626, C04B 35/632, C04B 35/634, F01D 5/28

(54) **INTRODUCTION OF METALLIC PARTICLES TO ENABLE FORMATION OF METALLIC CARBIDES IN A MATRIX**

(30) Priority: 17.12.2021 US 202117554657
(71) Applicant: Raytheon Technologies Corporation, Farmington, CT 06032 (US)
(72) Inventor: COLBY, Mary, West Hartford, 06117 (US); SHE, Ying, Rocky Hill, 06067 (US)
(74) Representative: Dehns

(57) **Abstract**

A method of forming a ceramic matrix composite includes depositing particles on a ceramic fabric formed from a plurality of ceramic tows, applying a binder to at least the particles to form a stabilized ceramic fabric, forming a preform using the stabilized ceramic fabric, and densifying the preform. The ceramic tows are formed from a first material and the particles are formed from at least a second material.

## Description

### BACKGROUND

The present invention relates to ceramic matrix composites, and more particularly to the preparation of ceramic fabrics for use in ceramic matrix composites.

The microstructure of a composite component is dictated, in part, by the fiber tow structure. In the case of a ceramic matrix composites (CMC), the microstructure of the tows also dictates the way the matrix is deposited during chemical vapor infiltration (CVI), with some voids remaining in the CMC after CVI. Additionally, increased temperature capabilities of the matrix are often desired. Introduction of various types of metallic particles can improve the thermal conductivity and decrease the porosity of CMC component.

### SUMMARY

A method of forming a ceramic matrix composite includes depositing particles on a ceramic fabric formed from a plurality of ceramic tows, applying a binder to at least the particles to form a stabilized ceramic fabric, forming a preform using the stabilized ceramic fabric, and densifying the preform. The ceramic tows are formed from a first material and the particles are formed from at least a second material.

A ceramic fiber preform includes a plurality of ceramic subcomponents comprising a ceramic material formed from tows of a first material and a particle mixture deposited on at least a subset of the ceramic subcomponents. The particle mixture can include a surfactant, a solvent, and particles formed from at least a second material.

Features of embodiments are set forth in the dependent claims.

### BRIEF DESCRIPTION OF THE DRAWINGS

FIG. 1 is a flowchart illustrating a method of forming a CMC component.
FIG. 2 is a simplified cross-sectional view through a portion of a ceramic preform.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

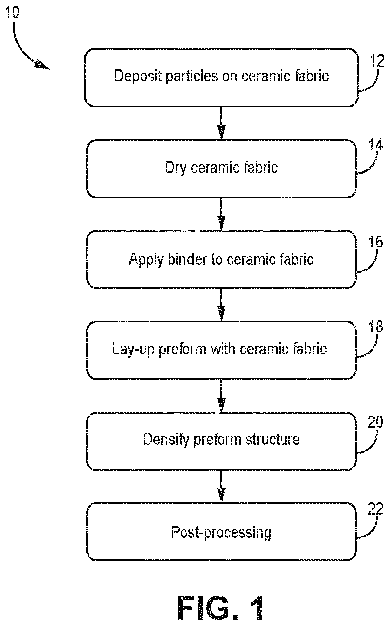

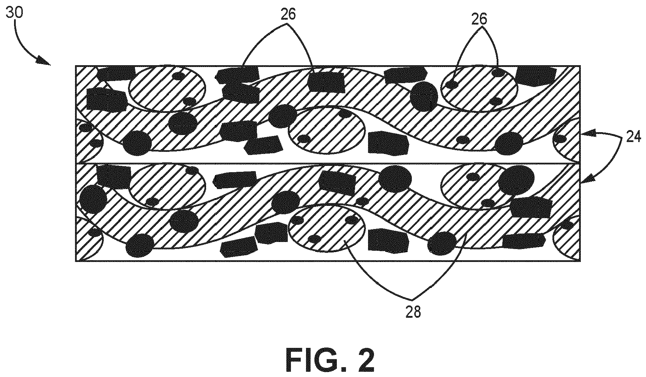

This disclosure presents a method of forming CMC components having improved mechanical and/or thermal properties suitable for high-temperature and otherwise harsh operating environments. FIG. 1 is a flowchart illustrating method 10 of forming a CMC component using particle-enhanced ceramic fabrics. FIG. 2 is a simplified cross-sectional view of preform 30 as an arrangement of fiber plies 24 formed from such fabrics. FIGS. 1 and 2 are discussed together.

At step 12, particles 26 are deposited on a fibrous ceramic material. In an exemplary embodiment, such material can be a sheet of dry woven ceramic fabric formed from tows 28 of bundled filaments of silicon carbide (e.g., Hi-Nicalon^{™}) or other suitable ceramics in various woven architectures. Woven architectures can include satin weaves (e.g., 3, 4, 5, 8-harness, etc.) as well as other woven architectures (e.g., plain, twill, bias, etc.). Alternative architectures can include unidirectional fabrics or braided (e.g., biaxial or triaxial) material. The ceramic fabric can further have a generally bimodal pore distribution with voids existing between tows (i.e., inter-tow pores) and relatively smaller voids between filaments of a tow (i.e., intra-tow pores).

Exemplary particles 26 can be metallic particles. As used herein, the term "metallic" can include transition and refractory metals, metalloids, oxides of rare-earth metals, and carbides. More specifically, a first category can include particles 26 formed from tungsten and/or tantalum. Such particles can be shaped like one or a combination of plates, rods, and spheres. A second category can include particles 26 formed from tantalum and/or hafnium. A third category can include particles 26 formed from boride-coated silicides, boride-coated rare earth oxides, and/or tantalum-coated carbides. The second and third category particles 26 can be shaped like plates and/or spheres. Particles 26 can be incorporated into a mixture (e.g., slurry) to facilitate deposition onto the ceramic fabric. Such a particle mixture can include an organic surfactant, such as triethylamine or polyethyleneimine, to facilitate particle adhesion to the fabric. The particle mixture can further include a solvent, such as ethanol, methanol, acetone, or water. In an exemplary embodiment, the particle mixture will include solvent, 0.05 to 2.0 vol% surfactant, and 5.0 to 20 vol% particles 26.

Particle deposition can be carried out in various ways. In one embodiment, the ceramic fabric can be immersed in the particle mixture. Immersion can include using a series of rollers to pull a planar ceramic fabric through a vat of the particle mixture. Alternative embodiments can include techniques such as spraying, painting, and printing of the mixture onto the ceramic fabric. Such techniques may be particularly advantageous for more selective deposition onto discrete regions of the fabric, and in such a case, can be coupled with a masking technique to cover the remainder of the fabric. These techniques can also be used to more broadly apply particles 26 to the fabric, similar to the immersion technique, and may further be desirable for delicate fabrics, or non-planar materials such as braids. Particle deposition can be carried out in as many rounds as necessary, and using one or a combination of techniques, to achieve desired particle loading in the ceramic fabric.

It can be desirable to target either of the larger, inter-tow pores or the smaller, intra-tow pores for particle deposition. In either case, the particle mixture can contain a single or narrow particle size distribution commensurate with the targeted pore size. Deposition targeting both the inter and intra-tow pores can be carried out using a single particle mixture containing multiple or a wide particle size distribution. Because of the disparity in size between inter and intra-tow pores, larger particles 26 will tend to occupy the inter-tow pores, while the smaller particles 26 will tend to move through the larger, inter-tow pores during deposition to occupy the intra-tow pores. In this way, particle size and size distribution can be selected for a specific ceramic fabric, as fabric architecture can influence pore size and distribution. For example, desirable particle 26 sizes for various fabrics might include a range of 1 to 10 microns to target the smaller, intra-tow pores, and 60 to 110 microns to target the larger, inter-tow pores. In a particular embodiment, the smaller particles 26 can be about 7 microns and the larger particles 26 can be about 100 microns. It is further possible, if targeting deposition in both inter and intra-tow pores, to apply distinct particle mixtures, each with a single or narrow particle size distribution commensurate with the inter and intra-tow pores, respectively. For example, a first mixture of particles 26 ranging from 1 to 10 microns can be applied, followed by a second mixture of the larger particles 26 ranging from 60 to 110 microns. The application of a single mixture may be more efficient with respect to time and cost.

An optional drying step 14 can be carried out after the particle deposition of step 12. Drying can include one or both of placing the fabric under a hood and heating the fabric in an oven in order to remove/evaporate the solvent from the particle mixture. Other suitable drying techniques are contemplated herein. The type and amount of solvent in the mixture will influence the drying time and/or temperature.

After particle deposition, a binder material can optionally be applied to the ceramic fabric and particles at step 16. An exemplary binder can be a polymer binder with a solvent, such as polyvinyl alcohol (PVA) and water, or polyvinyl butyral (PVB) and ethanol. The binder can be applied to the ceramic fabric in a manner similar to the application of the particle mixture (e.g., spraying, painting, etc.). The binder can help stabilize the fabric and applied particles 26 for subsequent processing that could otherwise disturb tows 28 and/or particles 26, such as cutting, stacking, bending, etc. In this sense, the ceramic fabric with an applied binder can be a stabilized fabric. Step 16 can further include heating after binder application to evaporate the binder solvent, and such heating can also be carried out in a manner (i.e., at suitable temperature and time) to react and/or convert the surfactant remaining in the fabric.

In an alternative embodiment, the binder can instead be applied to particles 26 prior to deposition onto the fabric. More specifically, particles 26 can be coated with the binder in a manner similar to the application of the binder to the fabric. In such an embodiment, step 16 can precede or merge with step 12, and the optional drying step 14 can be carried out in such a way as to both evaporate the solvent in the particle mixture and the binder solvent. Binder applied in this manner can still have a stabilizing effect with respect to keeping particles 26 in place within the fabric during subsequent processing.

Preforming occurs at step 18. This can also include the trimming of a sheet of ceramic fabric into plies. At this step, ceramic subcomponents (e.g., plies and/or braided structures) with deposited particles can be incorporated into a preform (e.g., preform 30). They may be incorporated with other, particle-enhanced ceramic material, or with ceramic material not enhanced in the manner described herein.

At step 20, the preform can undergo matrix formation and densification using a CVI process. During densification, the plies are infiltrated by reactant vapors, and a gaseous precursor deposits on the fibers. The matrix material can be a silicon carbide or other suitable ceramic material. Densification is carried out until the resulting CMC has reached the desired residual porosity. Typically, one or several interphases are deposited prior to the matrix to ensure that the composite fails in a non-brittle manner.

At step 22, various post-processing steps can be performed, such as the application of one or more protective coatings (e.g., environmental and/or thermal barrier coatings). A bond coat can also be applied to facilitate bonding between the CMC and a protective coating. Other protective coatings, especially those suitable for use in a gas turbine engine environment, are contemplated herein.

Particles 26 can remain in the final (i.e., densified) CMC component to impart improved thermal and mechanical properties to the component. For example, particles of the first category can potentially reduce the porosity and improve thermal capabilities of the component. Particles of the second category can improve density and have self-healing abilities when reacted with byproducts of the operating environment, forming, for example, various carbides. Coated particles of the third category can generally impart the characteristics of both the first and second category particles. First, the boride or tantalum coating can oxidize in the operating environment to form oxides capable of reacting with silica (a product of the oxidation of matrix silicon carbide) to form a low viscosity glass capable of filling microcracks in the component. Additionally, the core of silicide, a rare-earth oxide, or carbide can also react with the silica to form high-temperature, rare-element silicates. Depending on factors such as component geometry, operating environment, etc., it can be desirable to incorporate particles from each category, whether by using a heterogenous particle mixture on ceramic fabrics of a single preform, or by incorporating fabrics with different homogeneous mixtures in a single preform.

A CMC component formed with the disclosed ceramic fabrics can be incorporated into aerospace, maritime, or industrial equipment, to name a few, non-limiting examples.

### Discussion of Possible Embodiments

The following are non-exclusive descriptions of possible embodiments of the present invention.

A method of forming a ceramic matrix composite includes depositing particles on a ceramic fabric formed from a plurality of ceramic tows, applying a binder to at least the particles to form a stabilized ceramic fabric, forming a preform using the stabilized ceramic fabric, and densifying the preform. The ceramic tows are formed from a first material and the particles are formed from at least a second material.

The method of the preceding paragraph can optionally include, additionally and/or alternatively, any one or more of the following features, configurations and/or additional components:
In the above method, the first material can be silicon carbide.

In any of the above methods, the second material can be one of tungsten and tantalum.

In any of the above methods, the second material can be one of hafnium and tantalum.

In any of the above methods, the particles can be formed from a core of the second material and coated with a third material, the second material can be one of a silicide, a rare earth oxide, and a carbide, and the third material can be one of a boride and tantalum.

In any of the above methods, the step of depositing the particles on the ceramic fabric can include one of immersion, spraying, painting, and printing.

Any of the above methods can further include masking a portion of the ceramic fabric to selectively deposit the particles.

In any of the above methods, the step of applying the binder to at least the particles can include one of applying the binder to the ceramic fabric after depositing particles and applying the binder to the particles prior to depositing the particles. The binder can include a solution of a polyvinyl alcohol and water or polyvinyl butyral in ethanol.

Any of the above methods can further include drying the ceramic fabric after the step of depositing the particles.

In any of the above methods, the particles can be deposited as a particle mixture including the particles, a surfactant, and a solvent.

In any of the above methods, the step of densifying the preform can include chemical vapor infiltration.

A ceramic fiber preform includes a plurality of ceramic subcomponents comprising a ceramic material formed from tows of a first material and a particle mixture deposited on at least a subset of the ceramic subcomponents. The particle mixture can include a surfactant, a solvent, and particles formed from at least a second material.

The preform of the preceding paragraph can optionally include, additionally and/or alternatively, any one or more of the following features, configurations and/or additional components:
In the above preform, the first material can be silicon carbide.

In any of the above preforms, the second material can be one of tungsten and tantalum.

In any of the above preforms, the second material can be one of hafnium and tantalum.

In any of the above preforms, the particles can be formed from a core of the second material and coated with a third material, the second material can be one of a silicide, a rare earth oxide, and a carbide, and the third material can be one of a boride and tantalum.

In any of the above preforms, the surfactant can be one of triethylamine and polyethyleneimine.

In any of the above preforms, the solvent can be one of methanol, ethanol, acetone, and water.

In any of the above preforms, a composition of the particle mixture can include 5 to 20 vol% of the particles and 0.05 to 2.0 vol% of the surfactant.

In any of the above preforms, a particle size of a first subset of the particles can range from 1 to 10 microns and a particle size of a second subset of the particles can range from 60 to 110 microns.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming a ceramic matrix composite, the method comprising:
depositing particles (26) on a ceramic fabric, the ceramic fabric being formed from a plurality of ceramic tows (28);
applying a binder to at least the particles (26) to form stabilized ceramic fabric;
forming a preform (30) using the stabilized ceramic fabric; and
densifying the preform (30);
wherein the ceramic tows (28) are formed from a first material, and wherein the particles (26) are formed from at least a second material.

2. The method of claim 1, wherein the step of depositing the particles (26) on the ceramic fabric comprises one of immersion, spraying, painting, and printing.

3. The method of claim 2 and further comprising: masking a portion of the ceramic fabric to selectively deposit the particles (26).

4. The method of any preceding claim, wherein the step of applying the binder to at least the particles (26) comprises one of:
applying the binder to the ceramic fabric after depositing particles (26); and
applying the binder to the particles (26) prior to depositing the particles (26);
wherein the binder comprises a solution of a polyvinyl alcohol and water or polyvinyl butyral in ethanol.

5. The method of claim 4 and further comprising: drying the ceramic fabric after the step of depositing the particles (26).

6. The method of any preceding claim, wherein the particles (26) are deposited as a particle mixture, the particle mixture comprising:
the particles (26);
a surfactant; and
a solvent.

7. The method of any preceding claim 1, wherein the step of densifying the preform (30) comprises chemical vapor infiltration.

8. A ceramic fiber preform (30) comprising:
a plurality of ceramic subcomponents, each of the subcomponents comprising a ceramic material formed from tows (28) of a first material; and
a particle mixture deposited on at least a subset of the ceramic subcomponents;
wherein the particle mixture comprises:
a surfactant;
a solvent; and
particles (26) formed from at least a second material.

9. The method of any of claims 1 to 7 or preform (30) of claim 8, wherein the first material is silicon carbide.

10. The method or preform (30) of any preceding claim, wherein the second material is one of tungsten and tantalum.

11. The method or preform (30) of any of claims 1 to 9, wherein the second material is one of hafnium and tantalum.

12. The method or preform (30) of any preceding claim, wherein the particles (26) are formed from a core of the second material and coated with a third material, wherein the second material is one of a silicide, a rare earth oxide, and a carbide, and wherein the third material is one of a boride and tantalum.

13. The preform (30) of any of claims 8 to 12, wherein the surfactant is one of triethylamine and polyethyleneimine; and/or wherein the solvent is one of methanol, ethanol, acetone, and water.

14. The preform (30) of any of claims 8 to 13, wherein a composition of the particle mixture comprises:
5 to 20 vol% of the particles (26); and
0.05 to 2.0 vol% of the surfactant.

15. The preform (30) of any of claims 8 to 14, wherein a particle size of a first subset of the particles (26) ranges from 1 to 10 microns, and wherein a particle size of a second subset of the particles (26) ranges from 60 to 110 microns.
